Europäisches Patentamt

European Patent Office

Office européen des brevets

(19)

(11) Veröffentlichungsnummer : **0 310 789 B1**

(12) # EUROPÄISCHE PATENTSCHRIFT

(45) Veröffentlichungstag der Patentschrift :
**12.06.91 Patentblatt 91/24**

(51) Int. Cl.⁵ : **A01G 9/02**

(21) Anmeldenummer : **88113169.2**

(22) Anmeldetag : **12.08.88**

(54) Durchbrochener Pflanzenbehälter für Epiphyten.

(30) Priorität : **08.10.87 DE 3734074**

(43) Veröffentlichungstag der Anmeldung :
**12.04.89 Patentblatt 89/15**

(45) Bekanntmachung des Hinweises auf die
Patenterteilung :
**12.06.91 Patentblatt 91/24**

(84) Benannte Vertragsstaaten :
**AT BE CH DE ES FR GB GR IT LI LU NL SE**

(56) Entgegenhaltungen :
**DE-A- 2 729 454**
**DE-A- 2 949 420**
**FR-A- 2 390 088**
**US-A- 4 561 208**

(73) Patentinhaber : **VIVARIA GMBH IMPORT VON**
**PFLANZEN UND TIEREN**
**Wallensteinstrasse 10**
**W-8193 Geretsried (DE)**

(72) Erfinder : **Koerper, Hans, Dipl.-Kfm.**
**Seni-Weg 15**
**W-8192 Geretsried (DE)**

(74) Vertreter : **Patentanwälte Grünecker,**
**Kinkeldey, Stockmair & Partner**
**Maximilianstrasse 58**
**W-8000 München 22 (DE)**

## Beschreibung

Die Erfindung betrifft einen Pflanzenbehälter nach dem Oberbegriff des Anspruches 1.

Zu den seit langem in Wohnbereich in Erd- oder Hydrokultur gehaltenen Ziergewächsen gesellen sich seit einiger Zeit auch Epiphyten, auch Aufsitzer genannt. Dies sind Pflanzen, die in der Natur auf Sträuchern oder Bäumen, gegebenenfalls auch auf Steinen oder dgl., leben. Sie nutzen die genannten Unterlagen im wesentlichen als Stütze für die Wurzeln, beziehen ihre Nahrung jedoch nicht aus diesen sondern meist über die Blätter, Luftwurzeln oder dgl., benötigen also kein Erdreich. Zur Haltung in Wohnungen oder dgl. ist somit in erster Linie eine Stützkonstruktion erforderlich.

Aus dem DE-GM 85 05 654 ist ein Epiphyten-Korb bekannt, dessen Seitenwandsegmente aus einzelnen, in Gebrauchsstellung horizontalen Stäben besteht, die an ihren Eckpunkten mittels vertikal durchgehender Verbindungselemente zusammengehalten werden. Die Verbindungselemente durchsetzen Bohrungen in den Stäben. Vorgesehen sind starre Verbindungselemente, wie Ketten. Dieselben Verbindungselemente haltern am unteren Teil des Epiphytenkorbes zusätzlich einen Boden. Der Aufbau des bekannten Behälters erfordert ein mühsames Auffädeln der einzelnen Stäbe auf die Verbindungselemente und beim Abbau ein entsprechend mühseliges Abziehen. Bei einem bereits bepflanzten Korb wird diese Manipulation besonders umständlich und kann leicht zum Beschädigen der Pflanzen führen. Ein, wie vorgesehen, mit den Verbindungselementen aufgehängter Epiphytenkorb muß zu einer baulichen Veränderung abgenommen und sorgfältig in für die Pflanze geeigneter Weise abgestützt werden, bis ein Umbau erfolgt ist. Etwa einzusetzende Distanzstücke zwischen den Seitenwandsegmenten sind ebenfalls auf die durchgehenden Verbindungselemente aufzufädeln. Ein weitere Nachteil des bekannten Epiphytenkorbes besteht darin, daß die durchgehenden Verbindungselemente in ihrer Länge für die größte mögliche Wandhöhe ausgelegt sein müssen. Bei niedriger Bauhöhe bzw. beim Beginn des Pflanzenwachstums ergeben sich also herausragende Stäbe oder überlange Kettenenden, die das Aussehen beeinträchtigen.

Aufgabe der vorliegende Erfindung ist es, einen Pflanzenbehälter für Epiphyten zu schaffen, der bei wirtschaftlicher Herstellung auf einfache Weise auf-, ab- und umzubauen ist, mit oder ohne Bepflanzung, sowie pflanzenfreundlich und optisch ansprechend ist und bleibt.

Diese Aufgabe wird erfindungsgemäß durch die Merkmale des Anspruches 1 gelöst.

Bei dem erfindungsgemäßen Pflanzenbehälter stützt sich jedes Seitenwandsegment gesondert mit seinen Ansteckansätzen auf dem darunterliegenden Seitenwandsegment bzw. der Bodenplatte ab. Es ist somit einzeln anbringbar bzw. abzunehmen. Bis auf die kleine vertikale Einsteckbewegung kann jedes Seitenwandsegment von der Seite her an seinen Platz und damit an eine im Korb befindliche Pflanze heranbewegt werden. Damit ist die größtmögliche Schonung der Pflanze gewährleistet. Eine Veränderung des Aufbaues ist auch bei hängendem Behälter ohne Abnehmen von der Aufhängung möglich. Der Behälter ist von seiner Handhabung und auch von seinem Aussehen her in erster Linie dafür geeignet und bestimmt, zum Raumschmuck bestimmte Pflanzen aufzunehmen und ihre einfache Pflege durch interessierte Laien zu ermöglichen. Die Ausbildung aus Kunststoff gestattet eine problemlose Herstellung in beliebigen, den Pflanzen anpaßbaren Farben. Beim Umsetzen können die Pflanzen von den Kunststoffteilen leicht abgenommen werden, ohne daß die Wurzeln beim Ablösen beschädigt werden. Die Teile können rund und mit abgerundeten Kanten, also pflanzenfreundlich, ausgebildet sein. Die Haltbarkeit erlaubt langen Gebrauch und Wiederverwendung, wobei der Behälter im Bedarfsfall auch zerleg- und aufbewahrbar ist.

Anspruch 2 spricht eine besonders optisch ansprechende Ausführungsform an.

Der Behälter kann wahlweise zum Hängen oder Aufstellen benutzt werden. Ersteres wird durch das Merkmal des Anspruches 3 ermöglicht.

Zum Stellen dient die Ausbildung gemäß den Ansprüchen 4 und 5. Dabei kann der Bausatz Stellfüße unterschiedlicher Länge umfassen, so daß bei wachsenden Wurzeln auf einfache Weise die Füße erhöht werden. Der Behälter steht sicher und das Aussehen wird nicht beeinträchtigt.

Die Merkmale des Anspruches 6 gewährleisten eine einfache Anbringung von Bindemitteln.

Das Merkmal des Anspruches 7 betrifft eine Erweiterung des erfindungsgemäßen Bausatzes, die insbesondere der Sauberhaltung dient. In verschlossenen Öffnungen kann sich kein Gießwasser oder Staub ansetzen. Außerdem ergibt sich ein optisch ansprechender Abschluß an den Randbereichen.

Vorteilhaft ist dem Bausatz gemäß Anspruch 8 eine Auffangschale für Tropfwasser zugeordnet, die vorteilhaft an der Grundplatte befestigbar ist. Die Art der Befestigung wird durch die Merkmale des Anspruches 9 angesprochen.

Eine vorteilhafte Weiterentwicklung hierzu ergibt sich aus den Merkmalen der Ansprüche 10 und 11. Die Auffangschale dient damit gleichzeitig bei aufgestelltem Behälter als Abstützorgan, und stützt ihrerseits die die Bohrungen der Grundplatte durchsetzenden Halteorgane und/oder in die Grundplatte eingeschraubte Stützstäbe.

Die Ausbildung nach Anspruch 12 gewährleistet einen besonders festen Zusammenhalt der Teile.

Das Merkmal des Anspruches 13 gewährleistet ferner, daß sowohl Stellfüße als auch Hängestäbe gleichzeitig angebracht werden können.

Ausführungsbeispiele · der Erfindung werden nachstehend anhand der Zeichnungen erläutert. Es zeigen :

Fig. 1 eine perspektivische Darstellung eines erfindungsgemäßen Behälters,

Fig. 2 die Draufsicht auf eine Grundplatte des Behälters nach Fig. 1,

Fig. 3 die Draufsicht auf ein Seitenwandsegment des Behälters nach Fig. 1,

Fig. 4 eine Seitenansicht des Seitenwandsegments nach Fig. 3,

Fig. 5 einen Schnitt durch einen Verbindungsbereich zwischen Grundplatte und zwei zueinander angeordneten Seitenwandsegmenten,

Fig. 6 einen Stellfuß,

Fig. 7 einen Aufhängestab,

Fig. 8 einen Stützstab,

Fig. 9 einen Einsteckstift,

Fig. 10 eine andere Ausführungform eines Stellfußes,

Fig. 11 eine andere Ausführungsform einer Grundplatte,

Fig. 12 einen vergrößerten Teilschnitt durch einen Verbindungsbereich zwischen der Grundplatte nach Fig. 11 und aufgesteckten Seitenwandelementen,

Fig. 13 eine Draufsicht auf eine Auffangschale, und

Fig. 14 einen Schnitt XIII-XIII durch die Auffangschale nach Fig. 13.

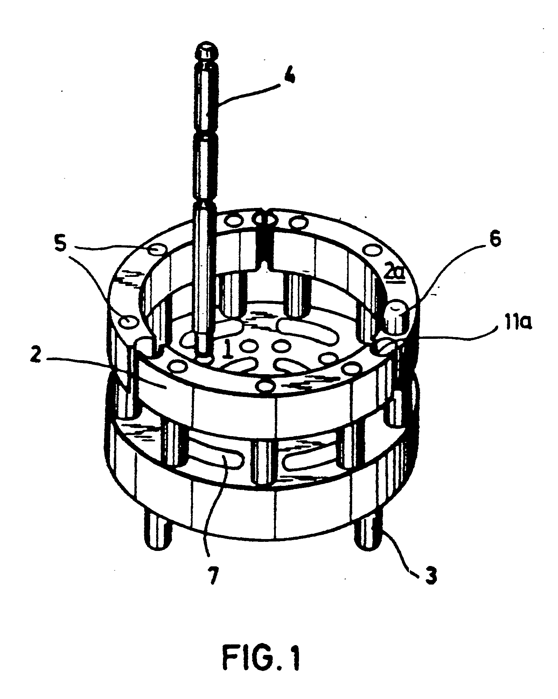

Der in Fig. 1 perspektivisch dargestellte Behälter ist aus einem Bausatz erstellt. Alle Einzelteile bestehen aus Kunststoff und sind ohne Verwendung von metallischen Verbindungselementen oder dgl. verbunden. Der Bausatz beteht aus einer Grundplatte 1 und Seitenwandsegmenten 2. An der Grundplatte 1 sind außerdem nach unten ragende Stellfüße 3 befestigt. Im Inneren des Behälters aufragnd ist außerdem ein Stützstab 4 gehalten. An der oberen Längskante 2a eines oberen Seitenwandsegmentes 2 ist eine der dort angeordneten Einstecköffnungen 5 durch einen Einsteckstift 6 verschlossen.

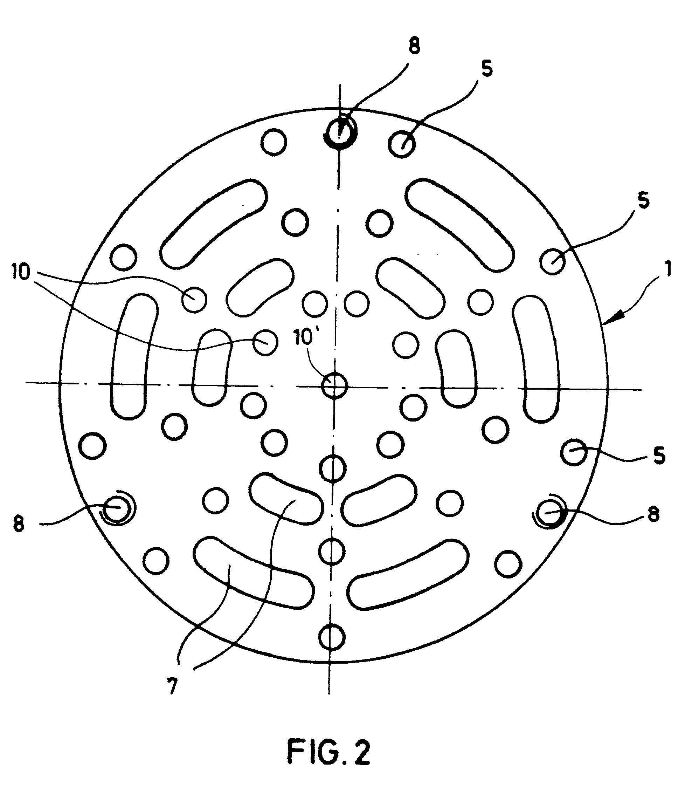

Fig. 2 zeigt die Grundplatte 1 in Draufsicht. Sie bildet den Boden des aufgebauten Behälters und weist Durchbrechungen 7 für Pflanzenwurzeln auf. Die Durchbrechungen 7 sind in Form allseitig abgerundeter Langlöcher verschiedener Größe über die Fläche verteilt, hier auf zum Plattenmittelpunkt konzentrischen Kreisen angeordnet.

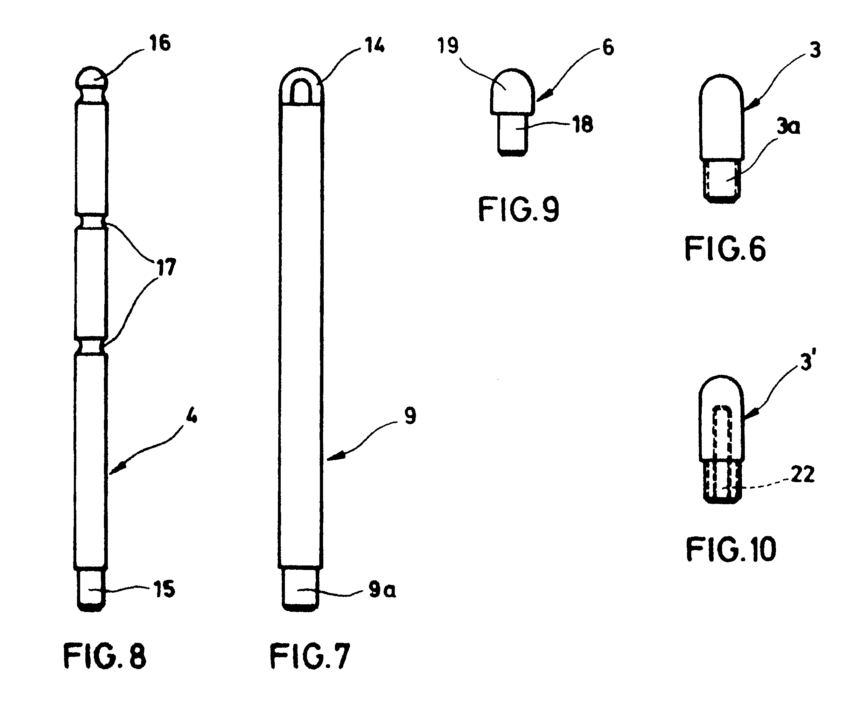

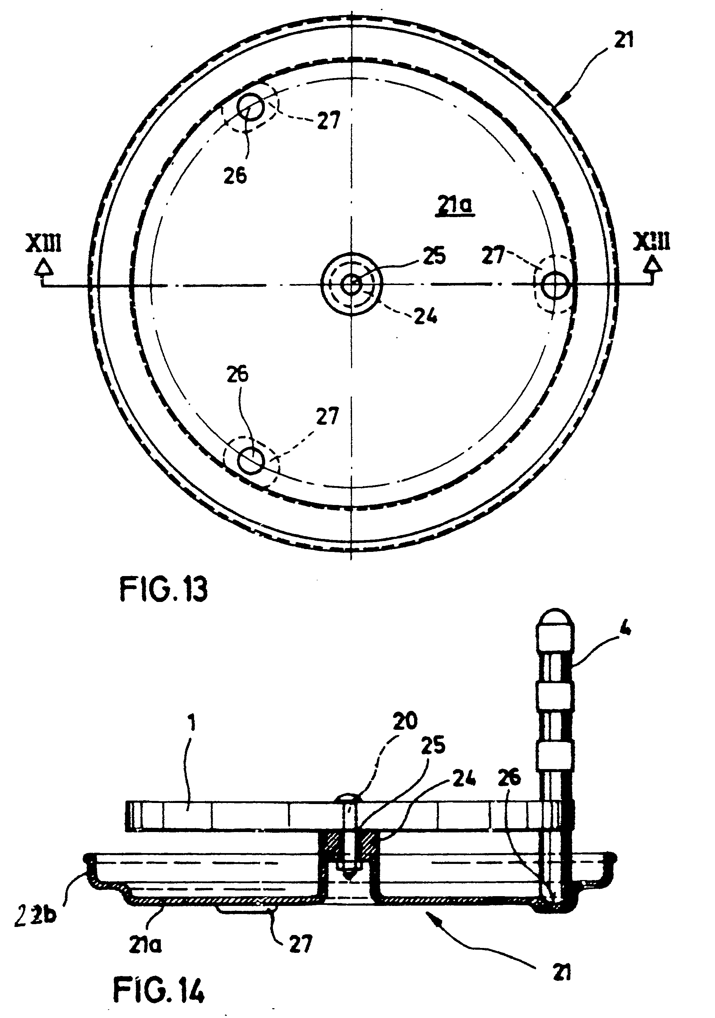

Weiterhin weist die Grundplatte Einstecköffnungen 5 zum Einsetzen von Seitenwandsegmenten 2 auf. Die Einstecköffnungen 5 sind auf einem zum Plattenrand parallelen und diesem naheliegenden ideellen Kreis angeordnet. Für jedes Seitenwandsegment sind drei solcher Einstecköffnungen vorgesehen. Insgesamt ist die Grundplatte für die Aufnahme von drei Seitenwandsegmenten bestimmt. Jeweils zwischen den beiden benachbarten Einstecköffnungen für benachbarte Seitenteile weist die Grundplatte eine durchgehende Gewindebohrung 8 auf. Die Gewindebohrungen 8 liegen auf derselben ideellen Kreislinie wie die Einstecköffnungen 5 und in gleichmäßigem Abstand zueinander, also jeweils in einem Bogenabstand von 120°. Die Gewindebohrungen sind wahlweise gedacht für das Einschrauben der Stellfüße 3 von unten und/oder von Hängestäben 9 (Fig. 7) von oben. Weiterhin sind zwischen den Durchbrechungen 7 über die Grundplatte zahlreiche Bohrungen 10 verteilt, hier ebenfalls auf ideellen Kreislinien verteilt. Jede Bohrung kann zum Einsetzen eines Stützstabes 4 zum Anbinden der Pflanzen verwendet werden, wodurch deren Anordnung individuell auf die jeweiligen Bedürfnisse der Pflanze abgestimmt werden kann. Freibleibende Bohrungen stehen wie die Durchbrechungen 7 dem Zutritt von Luft oder dem Durchtritt von Wurzeln zur Verfügung. Eine zentrale Bohrung 10' kann eine Schraube 20 zum Haltern einer Auffangschale 21 aufnehmen (Fig. 14).

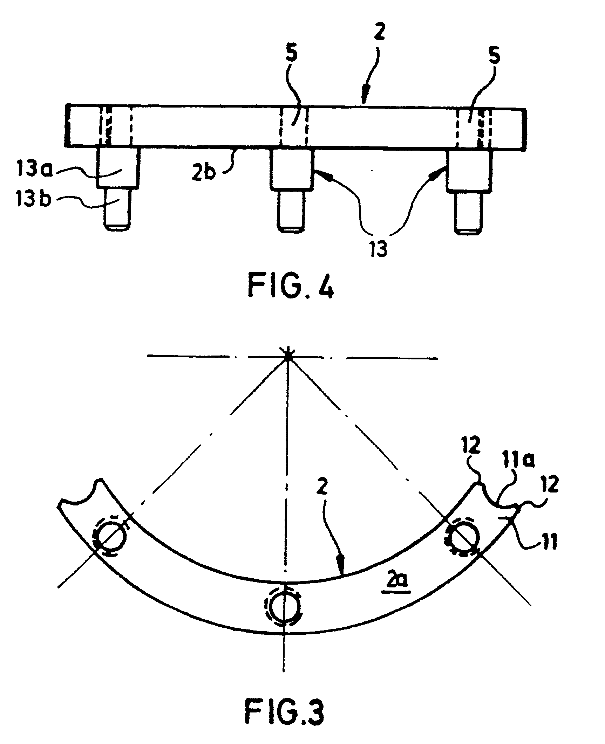

Ein Seitenwandsegment 2 ist in den Fig. 3 und 4 dargestellt. Es besteht einstückig aus Kunststoff. Es weist eine der Grundplatte entsprechend kreisbogenförmig gekrümmte Leiste 11 auf, deren Querschnitt etwa quadratisch ist, mit abgerundeten Kanten. Die Stirnflächen 11a an jeder Leistenseite sind im wesentlichen konkav ausgebildet mit leichten Abschrägungen 12 zu den Leistenrändern hin. Damit bleibt bei auf der Grundplatte nebeneinander angeordneten Seitenwandsegmenten ein Freiraum für den Durchtritt eines Hängestabes 9, der in einer der Gewindebohrungen 8 gehaltert ist. An der unteren Längskante 2b der Leiste sind drei Einsteckansätze 13 angeformt. Jeder Einsteckansatz 13 besteht aus zwei Abschnitten 13a und 13b, jeweils mit kreisförmigem Querschnitt. Der an die Leiste anschließende Absatz 13a weist den größeren Durchmesser auf. Der Absatz 13b ist im Durchmesser auf die Einstecköffnungen 5 der Grundplatte abgestimmt. Der Absatz 13a dient als Abstandhalter. An der oberen Längskante 2a der Leiste 11, und zwar koaxial mit den Einsteckansätzen, sind Einstecköffnungen 5 angebracht, die in ihren Abmessungen den Einstecköffnungen 5 der Grundplatte entsprechen. Somit kann jedes Seitenwandsegment 2 sowohl auf die Grundplatte als auch auf ein anderes Seitenwandsegment aufgesteckt werden, mit einem durch die Absätze 13a gewährleisteten Abstand. Der Behälter kann auf diese Weise mit beliebig hohen Seitenwänden aufgebaut werden.

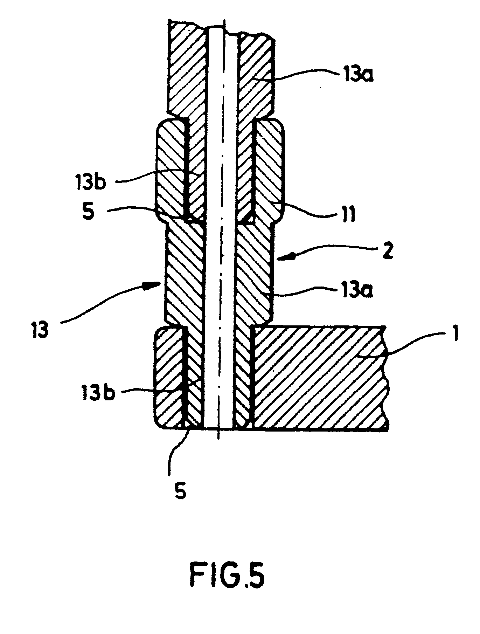

Fig. 5 zeigt in einer teilweisen Schnittdarstellung einen solchen Verbindungsbereich : in die Einstecköffnung 5 der Grundplatte 1 ist der Absatz 13b eines Einsteckansatzes 13 eingesteckt. Der dazugehörige Absatz 13a erstreckt sich über der Grundplatte 1 und trägt die Leiste 11 eines Seitenwandsegments 2. In deren Einstecköffnung 5 ist wiederum der Absatz 13b eines weiteren, hier nur durch seine Eisnteckansätze angedeuteten Seitenwandsegments eingesetzt. Der Absatz 13a des zweiten Seitenwandsegments ist abgebrochen.

Fig. 6 zeigt einen Stellfuß 3, wie er in Fig. 1 angedeutet ist. Es handelt sich um einen im Querschnitt kreisförmigen, an einem Ende abgerundeten länglichen Körper, an dessen anderem Ende ein Gewindezapfen 3a angebracht ist. Dieser Gewindezapfen ist in eine der Gewindebohrungen 8 der Grundplatte einschraubbar, wenn der fertige Behälter zum Aufstellen bestimmt ist. Im Rahmen des Bausatzes für den fertigen Behälter können Stellfüße verschiedener Länge vorgesehen sein. Gegebenenfalls kann die Stellhöhe des Behälters auf einfache Weise durch Auswechseln der Stellfüße gegen längere vergrößert werden.

Soll der Behälter nicht gestellt sondern aufgehängt werden, können in die Gewindebohrungen 8 von oben Hängestäbe 9 eingeschraubt werden. Der in Fig. 7 dargestellte Hängestab weist an einem Körper mit kreisförmigem Querschnitt an einem Ende einen Gewindezapfen 9a auf, passend zu den Gewindebohrungen 8 an der Grundplatte. Am anderen Ende ist eine Aufhängeöse 14 angeformt. Der gesamte Hängestab ist ausschließlich aus Kunststoff hergestellt.

Fig. 8 zeigt einen Stützstab 4, wie er auch in Fig. 1 angedeutet ist. Der im Querschnitt kreisförmige Stab, einstückig aus Kunststoff bestehend, weist an einem Ende einen Zapfen 15 auf, passend zu den Einstecköffnungen 5 der Grundplatte. Am anderen Längsende ist eine abgerundete Kuppe 16 angeformt. Über die Länge des Stützstabes 4 sind Einkerbungen 17, hier zwei, im Abstand voneinander verteilt. Die Einkerbungen sind ringförmig und konkav ausgerundet. Sie dienen dem leichten Anbringen von Bindemitteln zum Befestigen der Pflanze.

Ein weiteres Ergänzungsteil des Bausatzes zeigt Fig. 9, nämlich einen Einsteckstift 6, wie er bereits in Fig. 1 in einem Exemplar dargestellt ist. Ein Einsteckzapfen 18, der im Durchmesser auf die Einstecköffnungen 5 abgestimmt ist, trägt einen Rundkopf 19, welcher den Zapfen 18 in der Durchmessergröße übertrifft. Der Einsteckstift 6 kann beliebig zum Abdecken von Einstecköffnungen 5 benutzt werden, wobei insbesondere an die Einstecköffnungen der jeweils obersten Seitenwandsegmente gedacht ist. In den Einstecköffnungen der Seitenwandsegmente können sich leicht Gießwasser und Verunreinigungen sammeln, die schwer zu entfernen sind. Sofern in der Grundplatte die Bohrungen 10 eine den Einstecköffnungen 5 entsprechenden Durchmesser aufweisen, können mittels Einsteckstiften 6 auch die Anzahl der Öffnungen in der Grundplatte verringert werden.

Eine aus Fig. 10 ersichtliche andere Ausführungsform eines Stellfußes 3' weist eine Gewindebohrung 22 auf, die bei in die Grundplatte eingeschraubtem Stellfuß zur Oberseite der Grundplatte hin offen ist. So kann der an der Grundplatte angebrachte Stellfuß seinerseits zur Halterung eines in die Gewindebohrung einschraubbaren Hänge- oder Stützstabes dienen, dessen Gewindeansatz ein entsprechend kleines Gewinde aufweist.

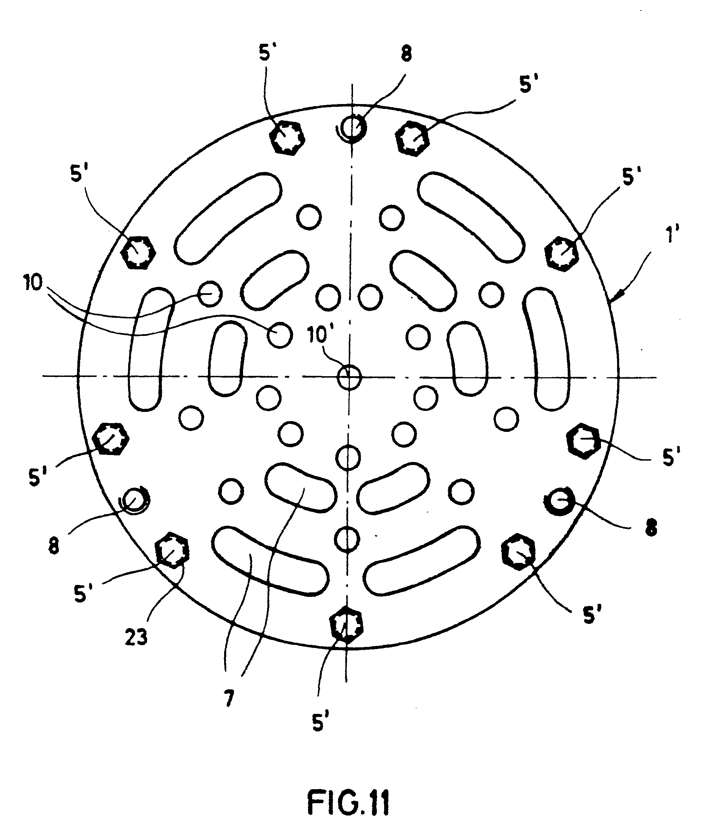

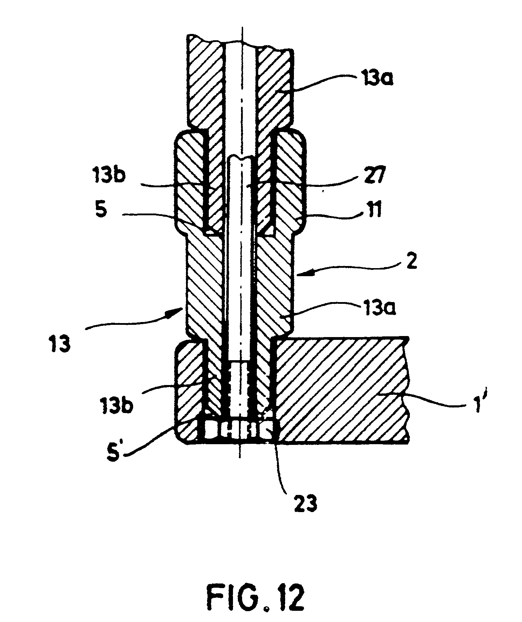

Für Pflanzenbehälter, bei denen mit besonders starker Beanspruchung der Seitenwandsegmente gerechnet werden muß, ist die in Fig. 11 dargestellte Ausführungsform einer Bodenplatte 1' bestimmt. Sie weist anstelle einfacher Einstecköffnungen 5 (Fig. 1) in Öffnungen 5' eingegossene Sechskantmuttern 23 aus Metall, vorzugsweise Edelstahl, auf. Damit können die entsprechenden Bohrungen 5 in den Seitenwandsegmenten und die zugehörigen Steckansätze 13 durchsetzende Schrauben 27, vorzugsweise ebenfalls aus Edelstahl, in die Grundplatte 1' eingeschraubt werden und die Seitenwandsegmente zusätzlich sichern. Dies ist in Fig. 12 gezeigt.

Anstatt die Sechskantmuttern 23 in die Grundplatte 1' einzugießen, können in letztere auch sechseckige Vertiefungen vorgesehen werden, in welche die Muttern bei Bedarf von unten einsetzbar sind. Sie müssen sich dann nach oben an Schultern der Vertiefungen abstützen.

Als weitere Ergänzung des Bausatzes ist eine in den Fig. 13 und 14 dargestellte Auffangschale 21 für Tropfwasser vorgesehen. Ihr Durchmesser übertrifft den Durchmesser der Grundplatte 1, wobei sie an ihre Bodenfläche 21a anschließend noch einen nach außen abgestuft hochgezogenen Rand 22b aufweist. Mittig ist ein über ihre Gesamthöhe hochgezogener Ansatz 24 mit einer Bohrung 25 angeordnet. Fig. 13 zeigt, wie mittels dieser Bohrung die Auffangschale 21 mit der Grundplatte 1 durch die Schraube 20 verbindbar ist.

Der Boden 21a weist außerdem drei Bodenvertiefungen 26 auf als Abstützmöglichkeit für einen Stützstab 4, wie rechts in Fig. 14 angedeutet. Die Vertiefungen 26 sind außerdem so angeordnet, daß sie der Anordnung der Gewindebohrungen 8 in der Grundplatte 1 entsprechen und, bei entsprechender Befestigung der Auffangschale, auch zum Abstützen durchgeschraubter Hängestäbe 9 dienen können. An der Unterseite der Auffangschale 21 sind im Bereich der Bodenvertiefungen 26 ovale Auflageflächen 27 angeformt, die beim Stellen als Füße für die Auffangschale dienen.

Die Erfindung ist nicht auf das Ausführungsbeispiel beschränkt. Der erfindungsgemäße Bausatz kann in weitem Maße in der Form variieren. So sind Grundplatten mit anderen Umrissen, beispielsweise auch abgerundet-rechteckig, sechseckig oder oval denkbar. Die Seitenwandsegmente können jeweils in geeignete Krümmungen, aber auch geradlinig ausgebildet sein. Im Rahmen der Erfindung sind auch Seitenwandsegmente denkbar, die nicht leistenförmig sondern flächig, also mit größerer Höhe ausgebildet sind, wobei die erwünschten Durchbrechungen angeformt sind. Bei ausreichender Wandstärke sind auch hier Aufsteckmöglichkeiten zur Wanderhöhung möglich.

Die geschilderte Anpassung der Seitenwandsegmente an zwischen ihnen einsteckbare Hängestäbe ist nicht zwingend notwendig. Es ist durchaus möglich, Gewindebohrungen für Hängestäbe im Abstand von den Seitenwandsegmenten vorzusehen, und zwar sowohl innerhalb als auch außerhalb der Seitenwände. Die Verbindung der Grundplatte mit Füßen oder Hängestäben über Gewinde sichert einen festen Zusammenhalt. Es sind jedoch auch hier, insbesondere für die Füße, Steckverbindungen möglich. Gegebenenfalls kann die Grundplatte mit gesteckten Füßen und in Gewindebohrungen an anderer Stelle eingeschraubten Hängestäben gleichzeitig aufgebaut werden.

## Ansprüche

1. Pflanzenbehälter zur Halterung von Epiphyten oder ähnlichen, von Natur aus ohne Erdreich auf Pflanzen oder Steinen siedelnden Gewächsen, der aus einem wenigstens einen Boden mit Einstecköffnungen und Seitenwandsegmente von etwa Leistenform, sowie Steckelemente umfassenden Bausatz erstellbar ist, **dadurch gekennzeichnet**, daß der Boden als Grundplatte (1) mit Durchbrechungen (7) für die Wurzeln sowie Bohrungen (10) zum Einstecken von Stützstäben (4) ausgebildet ist, daß jedes Seitenwandsegment (2) an einer ersten Längskante (2b) zu den Einstecköffnungen der Grundplatte passend angeordnete Einsteckansätze (13) und an einer der ersten Längskante entgegengesetztenzweiten Längskante (2a) Einstecköffnungen (5) für die Ansätze weiterer Seitenwandsegmente aufweist, daß die Einsteckansätze (13) zum Abstandhalten jeweils einen an die Längskante (2b) anschließenden Abschnitt (13a) mit größerem Querschnitt als die Einstecköffnung aufweisen, und daß der gesamte Bausatz aus Kunststoff besteht.

2. Behälter nach Anspruch 1, **dadurch gekennzeichnet**, daß die Grundplatte (1) kreisförmig ist und die Seitenwandsegmente (2) kreisbogenförmig gekrümmt sind.

3. Behälter nach Anspruch 1 oder 2, **dadurch gekennzeichnet**, daß der Bausatz in die Grundplatte (1) einsetzbare Hängestäbe (9) umfaßt.

4. Behälter nach einem der Ansprüche 1 bis 3, **dadurch gekennzeichnet**, daß die Grundplatte (1) Aufnahmen (8) für Stellfüße (3) aufweist.

5. Behälter nach Anspruch 4, **dadurch gekennzeichnet**, daß die Aufnahmen (8) als Gewindebohrungen ausgebildet sind und die Stellfüße (3) Gewindeansätze (3a) aufweisen.

6. Behälter nach einen der Ansprüche 1 bis 5, **dadurch gekennzeichnet**, daß die Stützstäbe (4) zum Befestigen von Bindemitteln umlaufende Einkerbungen (17) und/oder Bohrungen aufweisen.

7. Behälter nach einem der Ansprüche 1 bis 6, **dadurch gekennzeichnet**, daß zum Bausatz kurze Einsteckstifte (6) als oberer Abschluß von Einstecköffnungen (5), oder von Bohrungen (10) an den Seitenwandsegmenten (2) oder an der Grundplatte (1) gehören.

8. Behälter nach einem der Ansprüche 1 bis 7, **dadurch gekennzeichnet**, daß dem Bausatz eine an der Grundplatte (1) befestigbare Auffangschale (21) zugeordnet ist.

9. Behälter nach Anspruch 8, **dadurch gekennzeichnet**, daß die Auffangschale (21) einen zentralen hochgezogenen Ansatz (24) mit einer Bohrung (25) für eine durch die Mittelbohrung (10') der Grundplatte (1) einzuführende Schraube (20) aufweist.

10. Behälter nach Anspruch 8 oder 9, **dadurch gekennzeichnet**, daß die Auffangschale (21) Bodenvertiefungen (26) in einer Anordnung aufweist, die den Gewindebohrungen (8) an der Grundplatte (1) entsprechen, zum Abstützen dort eingesetzter Stäbe (4, 9).

11. Behälter nach Anspruch 10, **dadurch gekennzeichnet**, daß die Bodenvertiefungen (26) an der Unterseite als runde oder oval ausgedehnte Auflageflächen (27) für die Auffangschale (21) ausgebildet sind.

12. Behälter nach einem der Ansprüche 1 bis 11, **dadurch gekennzeichnet**, daß in die Grundplatte (1') Muttern (23) aus Metall, vorzugsweise Edelstahl, eingesetzt oder einsetzbar sind, in welche die Einsteckansätze (13) der Seitenwandsegmente (2) durchsetzende Befestigungsschrauben (27), vorzugsweise aus Edelstahl, einschraubbar sind.

13. Behälter nach einem der Ansprüche 4 bis 12, **dadurch gekennzeichnet**, daß die Stellfüße (3') jeweils eine an ihren Gewindeansatz offene Gewindebohrung (22) aufweisen und zum Bausatz Hängestäbe (9) und/oder Stützstäbe (4) mit entsprechendem Gewindeansatz gehören.

## Claims

1. Plant container for holding epiphytes or the like plants which by nature colonise plants or stones without soil, which can be made from a kit comprising at least one base with push-in openings and approximately strip-shaped side wall segments, as well as push-in components, characterised in that the base is constructed as a base plate (1) with apertures (7) for the roots as well as holes (10) for the insertion of supporting rods (4), that each side wall segment (2) comprises push-in projections (13) at a first longitudinal edge (2b) matching the push-in openings in the base plate, and push-in openings (5) at a second longitudinal edge (2a) opposite the first longitudinal edge for the projections of additional side wall segments, that the push-in projections (13) each comprise for spacing a section (13a) adjoining the longitudinal edge (2b) with a larger cross-section than the push-in opening, and that the whole kit is made of plastic.

2. Container according to claim 1, characterised in that the base plate (1) is circular and the side wall segments (2) are arcuately curved.

3. Container according to claim 1 or 2, characterised in that the kit includes hanging rods (9) which can be inserted in the base plate (1).

4. Container according to any of claims 1 to 3, characterised in that the base plate (1) comprises receptacles (8) for feet (3).

5. Container according to claim 4, characterised in that the receptacles (8) are constructed as threaded holes and the feet (3) comprise threaded projections (3a).

6. Container according to any of claims 1 to 5, characterised in that the supporting rods (4) comprise circumferential notches (17) and/or holes for fastening tying means.

7. Container according to any of claims 1 to 6, characterised in that the kit includes short push-in pins (6) as an upper seal for push-in openings (5), or for holes (10) in the side wall segments (2) or in the base plate (1).

8. Container according to any of claims 1 to 7, characterised in that associated with the kit is a collecting tray (21) which can be attached to the base plate (1).

9. Container according to claim 8, characterised in that the collecting tray (21) comprises a central raised projection (24) with a bore (25) for a screw (20) to be introduced through the centre hole (10') of the base plate (1).

10. Container according to claim 8 or 9, characterised in that the collecting tray (21) comprises bottom recesses (26) in an arrangement which correspond to the threaded holes (8) in the base plate (1), for supporting rods (4, 9) inserted therein.

11. Container according to claim 10, characterised in that the bottom recesses (26) are formed on the lower side as round or elongate oval supporting surfaces (27) for the collecting tray (21).

12. Container according to any of claims 1 to 11, characterised in that in the base plate (1') are or can be inserted nuts (23) made of metal, preferably special steel, into which can be screwed fixing screws (27), preferably made of special steel, which extend through the push-in projections (13) of the side wall segments (2).

13. Container according to any of claims 4 to 12, characterised in that the feet (3') each comprise a threaded hole (22) open at its threaded projection and the kit includes hanging rods (9) and/or supporting rods (4) with corresponding threaded projection.

## Revendications

1. Conteneur à plantes pour la tenue d'épiphytes ou végétaux analogues croissant de par leur nature sans terre sur des plantes ou des pierres, qui peut être construit à partir d'un kit composé d'au moins un fond muni d'orifices d'enfichage et de segments constituant des parois latérales approximativement en forme de tringles ainsi que d'éléments enfichables, caractérisé par le fait que le fond est réalisé en forme de plaque de base (1) à perforations (7) pour les racines ainsi que de perçages (10) pour l'enfichage de tuteurs (4), par le fait que chaque segment (2) constituant les parois latérales présente sur une première arête longitudinale (2b) des embouts (13) d'enfichage disposés de manière à s'adapter aux orifices d'enfichage de la plaque de base, et sur une arête longitudinale (2a) opposée à la première arête longitudinale des orifices d'enfichage (5) pour les embouts d'autres segments constituant les parois latérales, par le fait que les embouts d'enfichage (13) présentent chacun pour servir de pièces d'écartement, une section (13a) se raccordant à l'arête longitudinale (2b) et dont la section est supérieure à celle de l'orifice d'enfichage, et par le fait que l'ensemble du kit est réalisé en matière plastique.

2. Bac à plantes selon la revendication 1, caractérisé par le fait que la plaque de base est de forme circulaire et que les segments (2) constituant les parois latérales sont conformées en arcs de cercle.

3. Bac à plantes selon les revendications 1 et 2, caractérisé par le fait que le kit comprend des barres defin suspension (9) insérables dans la plaque de base 1.

4. Bac à plantes selon au moins l'une des revendications 1 à 3, caractérisé par le fait que la plaque de base (1) présente des prises (8) destinées à recevoir les pieds (3).

5. Bac à plantes selon la revendication 4, caractérisé par le fait que les prises (8) sont réalisées sous la forme de perçage fileté et que les pieds (3) présentent des embouts filetés (3a).

6. Bac à plantes selon au moins l'une des revendications 1 à 5, caractérisé par le fait que les barres de renfort (4) présentent des encoches périphériques (17) et/ou des perçages pour la fixation de moyens de liaisons.

7. Bac à plantes selon une des revendications 1 à 6, caractérisé par le fait que le kit comprend en outre des tiges d'insertion (6) servant à la fermeture supérieure d'orifices d'enfichage (5) ou de perçage (10) pratiqué sur les segments constituant les parois latérales ou sur la plaque de base (1).

8. Bac à plantes selon l'une des revendications 1 à 7 caractérisé par le fait qu'au kit est associé une coupe réceptacle (21) pouvant être fixée sur la plaque de base (1).

9. Bac à plantes selon la revendication 8, caractérisé par le fait que la coupe réceptacle (21) présente un embout central (24) étiré en hauteur muni d'un perçage (25) pour une vis à introduire à travers le perçage central (10') de la plaque de base (1).

10. Bac à plantes selon la revendication 8 ou 9, caractérisé par le fait que la coupe réceptacle 21 présente des encoches sur son fond dont la disposition correspond à celle des perçages filetés (8) pratiqués sur la plaque de base (1), pour servir d'appui aux barres et tuteurs (4, 9) qui y sont insérés.

11. Bac à plantes selon la revendication 10, caractérisé par le fait que les encoches (26) sur le côté inférieur sont réalisées de manière à constituer des faces d'appui (27) rondes ou ovales pour la coupe réceptacle (21).

12. Bac à plantes selon l'une des revendications 1 à 11, caractérisé par le fait que dans la plaque de base (1') sont insérés ou peuvent être insérés des écrous (23) en métal, de préférence en acier spécial, dans lesquels on peut visser les vis de fixation (27) qui passent à travers les embouts d'insertion (13) des segments (2), ces vis étant de préférence en acier spécial.

13. Bac à plantes selon l'une des revendications 4 à 12, caractérisé par le fait que les pieds (3') présentent respectivement un perçage fileté (22) ouvert sur leur embout fileté et que des barres de suspension (9) et/ou des tuteurs (4) à embout fileté correspondant font partie du kit.

FIG. 1

FIG. 2

9

FIG. 4

FIG. 3

FIG.5

FIG.8

FIG.7

FIG.9

FIG.6

FIG.10

EP 0 310 789 B1

FIG.11

FIG. 12

FIG.13

FIG.14